# EUROPÄISCHE PATENTSCHRIFT

(11) **EP 1 116 898 B1**
(45) Veröffentlichungstag und Bekanntmachung des Hinweises auf die Patenterteilung: **28.12.2005**
(21) Anmeldenummer: 00128466.0
(22) Anmeldetag: 23.12.2000
(51) Int. Cl.: F16D 55/36, F16D 65/12

(54) **Bremsvorrichtung für ein Fahrzeug**
Brake device for a vehicle
Dispositif de frein pour un véhicule

(30) Priorität: 12.01.2000 DE 10000915
(43) Veröffentlichungstag der Anmeldung: 18.07.2001
(73) Patentinhaber: Airbus Deutschland GmbH, 21129 Hamburg (DE)
(72) Erfinder: Roloff, Gerd, Dipl.-Ing., 21614 Buxtehude (DE); Haug, Tilman, Dr.-Ing., 89264 Weissenhorn (DE)
(74) Vertreter: Hansmann, Dierk

(56) Entgegenhaltungen:
- EP-A- 0 790 426
- WO-A-97/38235
- DE-U- 29 710 533
- GB-A- 1 204 952
- US-A- 2 683 504
- US-A- 2 893 519
- US-A- 3 731 776

## Beschreibung

Die Erfindung bezieht sich auf eine Bremsvorrichtung eines Fahrzeuges nach dem Oberbegriff des Anspruchs 1, deren Einsatz für Landfahrzeuge - und (vordergründig) für Luftfahrzeuge (Flugzeuge) geeignet ist.

Insbesondere aus dem Flugzeugbau ist es bekannt, daß bei größeren Flugzeugen (Verkehrsflugzeugen) in der Regel hydraulisch betätigte Mehrscheibenbremsen verwendet werden, die als Stator und Rotor angeordnet sind. Beide Scheibenarten sind in wechselnder Reihenfolge zu einem Bremsscheibenpaket geschichtet. Die Scheiben bekannter Flugzeugbremsen werden im wesentlichen aus Stahl (ST) oder kohlefaserverstärktem Kunststoff (C/C) gefertigt. Aufgrund des geringeren Gewichtes und der höheren Leistungsfähigkeit bestehen bei fast allen bekannten (militärischen und zivilen) Flugzeugtypen neuerer Bauart die Bremsscheiben aus kohlefaserverstärktem Kunststoff. Diesen dermaßen ausgestatteten Flugzeugbremsen haftet allerdings der Nachteil an, daß der bei den Belastungen des Bremsvorganges auftretende Verschleiß bei der C/C-Bremse zu hohen Ersatzteilkosten und bei der ST-Bremse zu einer - im Vergleich zur C/C-Bremse - kürzeren Lebensdauer führt. Die Bauweise einer C/C-Bremse, deren Bauweise einen Stator und einen Rotor aus gleichem Werkstoff berücksichtigt, zeichnet sich (im Vergleich der ST-Bremse) durch ein geringes Gewicht und hohe Belastbarkeit (Bremsleistungsfähigkeit) aus. Sie verzichtet auf Bremsbeläge im eigentlichen Sinne, weil die Bremswirkung mit einer (sogenannten) Scheibe / Scheibe-Paarung umgesetzt wird. Zurückkommend auf die erwähnte ST-Bremse berücksichtigt deren Aufbau ein Mehrscheiben-Bremspaket, das unter anderem aus mehreren (auf der Radachse) seriell angeordneten Statoren und Rotoren (zuzüglich einer End- und einer Druckscheibe) besteht. Die Endscheibe befindet sich auf der Seite eines Gegenlagers, welche gegen einen fest auf der Radachse montierten und bspw. mit dem Fahrwerksbein eines Flugzeug-Fahrwerkes verschraubten Träger drückt. Die Druckscheibe, die sich auf der Seite eines Bremskolbengehäuses, das auf der Radachse mit dem Träger verschraubt ist, befindet, wird von einem Bremskolben in Richtung des Gegenlagers beansprucht. Die Bremsbeläge, die durch das Bremsen stark dem Verschleiß ausgesetzt sind, lassen sich nach deren Abnutzung nur beschwerlich austauschen. Ein Zerlegen der ST-Bremse ist kaum zu verhindern, falls ein Wechsel der Bremsbeläge notwendig wird. Dabei muß man eine Nietverbindung, mit der die Bremsbeläge an der Bremsscheibe (Stützring-Rotor) befestigt sind, lösen, um ungehindert den Austausch der verbrauchten Bremsbeläge gegen unverbrauchte (neue) Bremsbeläge vornehmen zu können. Danach werden die auszutauschenden Bremsbeläge dem betreffenden Stützring angenietet. Daran schließt sich der Zusammenbau der zerlegten ST-Bremse an. Ein sehr aufwendiger Vorgang, wie auch der (nichtsachkundiger) Fachmann zugestehen wird, wobei über ggf. auftretende Abnutzungserscheinungen des Stützringes, die sich infolge der Nietung am Stützring einstellen werden, nicht weiter befunden wird.

Der Wartungsaufwand stellt sich aufwendig dar, bedenkt man ferner, daß - auf den zivilen Flugbetrieb der Airlines bezogen - in der Praxis die Wartezeiten der im Liniendienst eingesetzten Verkehrsflugzeuge nur einem begrenzten Zeitrahmen entsprechen werden.

Geschuldet dem Gedanken, eine Flugzeugbremse mit hoher Bremsleistungsfähigkeit und (im Vergleich mit bekannten Flugzeugbremsen) niedrigen (zumindestens geminderten) Ersatzteilkosten bereitzustellen, wird kaum eine Mehrscheibenbremse mit wechselnder Reihenfolge der Bremsscheiben, deren Abnutzungserscheinungen durch das Bremsverhalten der (wirksamen) Bremsflächen beeinflusst wird, bekannt sein, deren Wartungsaufwand durch einen rationellen (schnellen und einfachen) Austausch der eingesetzten Bremsbeläge maßgeblich beeinflusst wird.

Außerdem wird erwähnt, dass aus den Druckschriften: die gattungsbildende "US-A 2,683,504", "US-A 2,893,519" und "GB 1 204 952 A" entsprechende Lösungen für eine Bremsanordnung eines Fahrzeuges (eines Flugzeuges) bekannt sind, die einen segmentartigen Aufbau einer Bremsscheibe für einen Bremsscheiben-Rotor offenbaren, um Verwerfungen bei hohen Bremstemperaturen zu vermeiden. Dabei ist es zunächst unerheblich, ob zur Montage die Bremsscheiben-Segmente von außerhalb der Bremsen befestigt werden können oder nicht, denn die betrachteten Bremsen werden nach dem Erreichen der Verschleißgrenze der am Bremsscheiben-Rotorumfang verteilt angeordneten Bremsscheiben-Segmente ohnehin zerlegt werden müssen. Der Aufbau jener Bremsen berücksichtigt mehrere Bremsscheibensegmentträger, die am Umfang eines Rotors der Bremse verteilt stemförmig angeordnet sind. Die Bremsscheibensegmente, die zwischen den Bremsscheibensegmentträgem positioniert sind, sind in ihrer Endposition (im eingebauten Zustand) jeweils an letzterem durch Nietung befestigt. Daher ein rationeller (schneller und unkomplizierter) Wechsel eines Bremsscheibensegmentes nicht möglich. Sofern ein Austausch der Bremssegmente notwendig wird, wird wegen dem Erreichen einer zulässigen Verschleißgrenze, die für jedes Bremssegment definiert ist, ein Zerlegen der Bremse kaum zu verhindern sein. Hinsichtlich der Berücksichtigung von Schnellverschlussbefestigungen, mit denen die Bremsscheibensegmente zwischen den Bremsscheibensegmentträgern gehalten werden könnten, und einer denkbaren Möglichkeit mit einem Hinweis oder einer Anregung darauf, nach der die Bremsbeläge jener Bremse von außerhalb letzterer rationell ein- oder ausgebaut werden könnten, schweigen sich die angegebenen Druckschriften aus.

Demzufolge liegt der Erfindung die Aufgabe zugrunde, eine Bremsvorrichtung bereitzustellen, die bei einem geringen Gewicht auf hohem Bremsleistungsniveau arbeitet, bei der durch einen rationellen Austausch der Bremsbeläge der Wartungsaufwand kostengünstig beeinflusst wird.

Diese Aufgabe wird durch die im Anspruch 1 aufgezeigten Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnungen näher erläutert.
Es zeigen
- **Fig. 1**: die Vorderansicht der Bremsvorrichtung;
- **Fig. 2**: die Draufsicht der Bremsvorrichtung;
- **Fig. 3**: eine weitere Draufsicht der Bremsvorrichtung.

Die weiteren allgemeinen Erläuterungen werden (nun) auf eine Flugzeugbremse bezogen, weil der beispielgemäße Einsatz der Bremsvorrichtung vordergründig für ein Flugzeug gedacht ist, wobei deren Einsatz für Landfahrzeuge ebenso denkbar wäre.

Eine übliche Flugzeugbremse stellt sich (für einen Sachkundigen) nach deren grundsätzlichen Aufbau und Funktion wie nachfolgend angegeben dar. Danach wird das (bereits erwähnte) Bremsscheibenpaket auf der Seite des Bremskolbengehäuses von einer Druckscheibe und auf der Seite des Gegenlagers von einer Gegenscheibe begrenzt. Wird die Druckscheibe von dem ringförmig im Bremskolbengehäuse angeordneten Bremskolben in Richtung des Gegenlagers bewegt, so spannt sie die Bremsscheibe zwischen sich und dem Gegenlager ein. Die Bremswirkung entsteht dadurch, daß sich die Rotoren durch die Reibung an den Statoren nur noch mit erhöhtem Widerstand von dem Rad mitdrehen lassen oder sie ganz an der Drehung gehindert werden. Falls die Bremse nicht mehr mit Druck beaufschlagt wird, läßt sich die Druckscheibe durch Rückholfedern wieder in die Ruhestellung zurückziehen. Die Bremsscheiben werden wieder frei drehen.

Diese vorangestellten (allgemeinen) Betrachtungen werden zum besseren Verständnis der nachfolgend vorgestellten Bremsvorrichtung, deren kompletter Aufbau als (sogenannte) "CMC"-Bremse bezeichnet wird, vorgetragen.

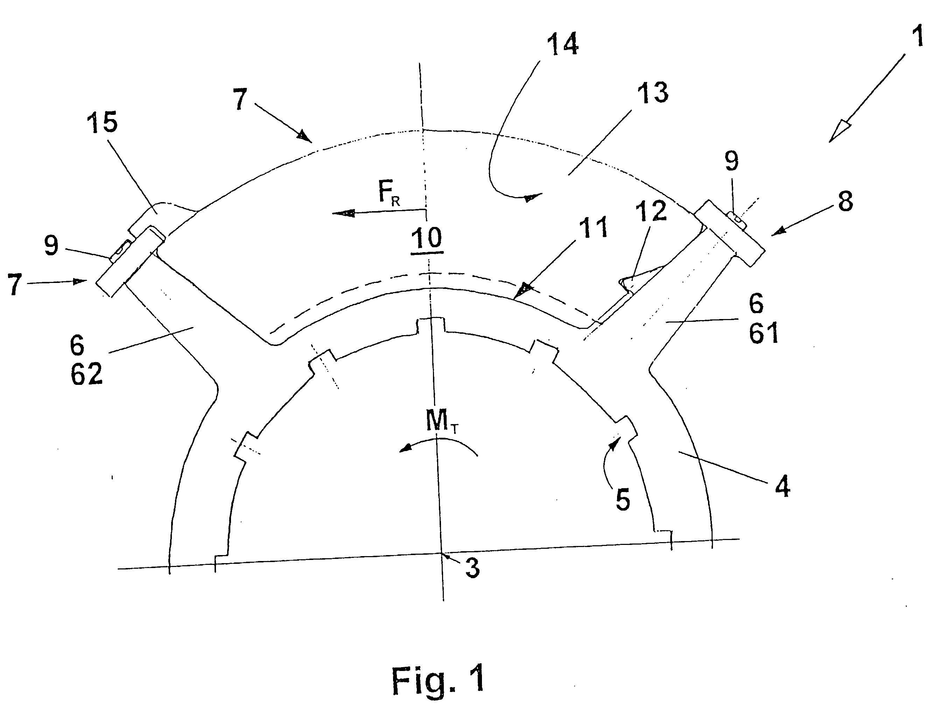

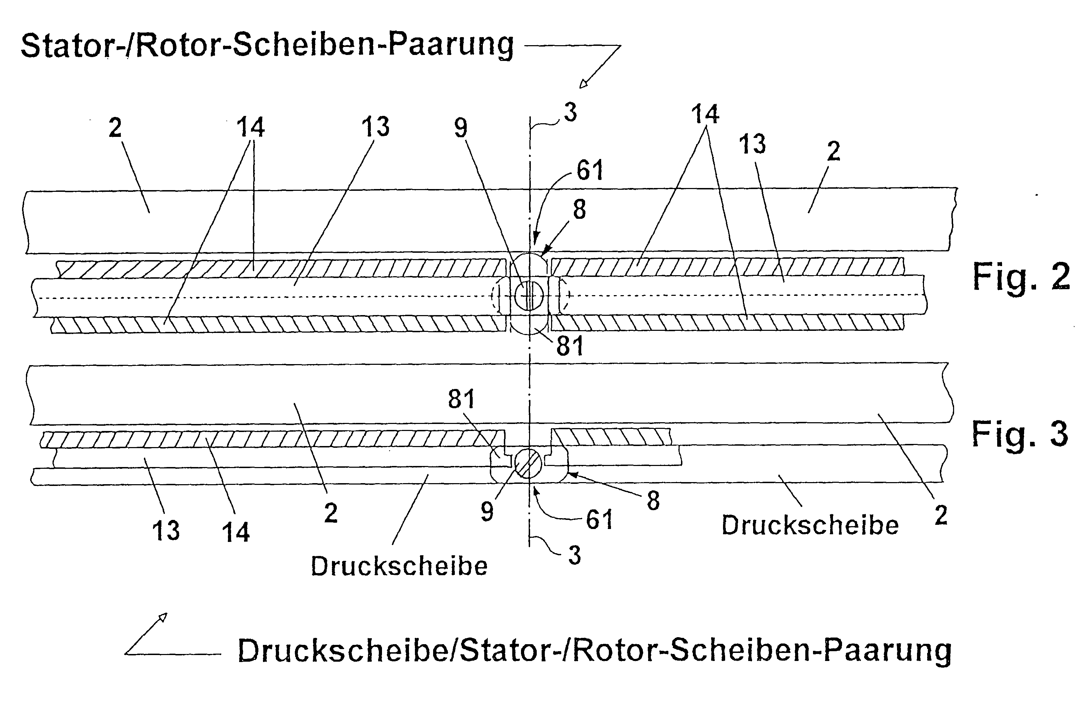

Nach den Figuren 1 und 2 besteht die Bremsvorrichtung aus einem Bremsscheibenpaket, das zusätzlich weiterer (nicht näher betrachteter) Führungselemente, die sich beispielsweise auf die vorerwähnte Druckscheibe auf der Seite des Bremskolbengehäuses und auf die Gegenscheibe auf der Seite des Gegenlagers beziehen, mit einem aus mehreren in wechselnder Reihenfolge seriell (sogenannten) angeordneten Bremsscheiben-Statoren 1 und (sogenannten) Bremsscheiben-Rotoren 2 aufgebaut ist. Der einzelne Bremsscheiben-Stator 1 ist auf einer Radachse 3, die sich mit der Bewegung des betreffenden (nicht gezeigten) Flugzeugrades eines (nicht gezeigten) Flugzeugfahrwerks bewegt, befestigt. Der Bremsscheiben-Rotor 2 dagegen wird auf der Radachse 3 beweglich gelagert. Alle dem Bremsscheibenpaket integrierten Bremsscheiben-Statoren 1 und Bremsscheiben-Rotoren 2 stehen sich (auf den einzelnen Stator und Rotor bezogen) bremsscheibenparallel gegenüber, soll heißen, die Bremsscheibenflächen der betreffenden Stator-Rotor-Anordnung sind parallel zueinander angeordnet.

Aus der Fig. 1, die den Bremsscheiben-Stator 1 in einer Vorderansicht darstellt, weist letzterer einen Stützring 4 auf, der über eine (figurlich nicht gezeigte) Keilwelle, die in die Nuten 5 am inneren Kreisumfang des Stützringes 4 greift, mit der Radachse 3 mechanisch verbunden ist.

Am Außenumfang des Stützringes 4 befinden sich mehrere (lotrecht dem äußeren Kreisumfang positionierte bzw. auf der Stützring-Außenoberfläche) emporstehend verteilt angeordnete Stützen 6, die außenumfänglich und im definierten Abstand zueinander fest angeordnet sind. Dabei wird ein definierter Stützenabstand gewählt, der es gestattet, daß zwischen den Stützen 6 stets ein in senkrechter Plattenlage positioniertes Bremssegment 7 angeordnet ist, das mit den Platten-Breitseiten dem Seitenbereich der Stützen 6 austauschbar befestigt wird. Der Aufbau des Bremssegmentes 7 wird später näher erläutert.

Die einzelne Stütze 6 kann (allgemein betrachtet) einen nichtrechteckigen Querschnitt besitzen, der auf das Beispiel bezogen eine Trapezform besitzt. Es handelt sich dabei (allgemein) um einen nichtrylindrischen aber quaderförmigen Körper, der auf das Beispiel bezogen den Querschnitt eines Kegelstumpfes aufweist. Die Grundfläche des Stützen-Körpers ist am Außenumfang des Stützringes 4 auf dessen Ringbreite sitzend befestigt.

Auf dem nicht befestigten Stützenende der betreffenden Stütze 6 ist ein Drehverschluß 8 installiert, der schwenkbar gelagert ist. Der Drehverschluß 8 ist scheibenförmig ausgebildet, der mit einer Schraube 9 befestigt ist. Letztere läßt sich mit einer (nicht dargestellten) Ausnehmung, die ein Innengewinde aufweist, in Richtung des (am Stützring-Außenumfang) befestigten Endes der betreffenden Stütze 6 schrauben. Danach ist zwischen einer ersten Stütze 61 und einer zweiten (der ersten Stütze 61am Stützring 4 außenumfänglich nachgeordneten) Stütze 62 ein Stützbereich 10 aufgespannt. Dieser (sogenannte) Stützbereich 10 ist durch den Teilabschnitt 11 der Außenoberfläche des Stützringes 4 zwischen den beiden Stützen 61, 62 und durch die erste und zweite Stütze 61, 62 selbst und durch eine unterhalb dem betreffenden Drehverschluß 8 einsetzende fiktive Begrenzung 12, die der Außenkontur (also der Wölbung des - Teilabschnittes 11 der Außenober-fläche) des Stützringes 4 folgt, begrenzt, innerhalb dem das Bremssegment 7 positioniert ist.

Nach dem Beispiel ist an der ersten Stütze 61 (also einer von zwei seriell angeordneten Stützen 6) ein unter Federspannung befindliches Arretierungselement (allgemein betrachtet) angeordnet. Das Arritierungselement ist mit einer [der (ersten) Stütze 61 versenkbaren] Raste 12 umgesetzt, die in Richtung der gegenüber positionierten (zweiten) Stütze 62 mit einer (von ihr aufgenommenen) Druckfeder vorgespannt ist. Wie angedeutet - läßt sich die Raste 12 in eine seitwärts der ersten Stütze 61 befindliche (schlitzartig vertiefte) Ausnehmung versenken.

Der Drehverschluß 8 ist mit einer horizontal (um die Schraubenachse der Schraube 9) schwenkbaren und frei beweglichen Lasche 81 umgesetzt, die man besser aus der Fig. 2 erkennen wird. Diese Lasche 81 stellt für den Bremsscheiben-Rotor 2 keine Behinderung dar. Dabei wird (mit einem Blick auf die Fig. 2 erkennbar) das zwischen der ersten und zweiten Stütze 61, 62 innerhalb dem Stützbereich 10 positionierte Bremssegment 7 mit dem (den) Laschenende(n) seitwärts der beiden emporstehenden Stützen 61, 62 in Richtung der Außenoberfläche des Stützringes 4 (vorerst einseitig) befestigt.

Nach dem Vorbild der Figuren 2 und 3 ist das Bremssegment 7 aus der Kombination eines plattenartigen Bremssegmentträgers 13 und einem auf ihm haftenden (meistens aufgeklebten) Bremssegmentbelag 14, der (allgemein) auf der Grund- und / oder der Deckfläche des Bremssegmentträgers 13 flächendeckend positioniert ist, zusammengesetzt. Nur bei der Ausführung nach der Fig. 3 wird der Bremssegmentbelag 14 flächeneinseitig dem plattenförmigen Bremssegmenträger 13 fest (soll bedeuten: unverrückbar) anhaften.

Zurückkommend auf die Darstellung nach der Fig. 1 ist oberhalb der sichtbaren Seitenkante des zwischen der ersten und zweiten Stütze 61, 62 positionierten Bremssegmentträgers 13 (an der vorerst noch unbefestigten bzw. noch zu befestigenden Stelle) einseitig ein Fixierelement (allgemein) angeformt. Letzteres ist mit einem Haken 15, der der Seitenkante, die nicht dem Teilabschnitt 11 des Stützringes 4 aufliegt, an bezeichneter Stelle fest angeformt, der sich über den Außenrandbereich der Lasche 81 des Drehverschlusses 8 schieben läßt.

Danach ist der Bremssegmentträger 13 mit dem auf ihm haftenden Bremssegmentbelag 14 beidseitig der beiden Stützen 61, 62 (also zwischen der ersten und zweiten Stütze 61, 62) befestigt. Die Befestigung geschieht einerseits mit der Fixierung des nehmlichen Hakens 15 auf der Lasche 81 und andererseits mit der federgespannten Raste 12 innerhalb einer dem Bremssegmentträger 13 [auf der zur ersten Stütze 61 zugewandten Seite(nkante)] ausgesparten (und der Rastenform angepaßten) seitwärts gelegenen Ausnehmung. Dadurch ist der Bremssegmentträger 13 im zwischen den Stützen 61, 62 positionierten Zustand durch den über die Lasche 81 greifenden Haken 15 und durch die ihn kantenseitlich arritierende Raste 12 unverrückbar fixiert.

Dabei füllt die auf der Außenoberfläche des Stützringes 4 emporstehende wirksame Bremsfläche (Grund- und Deckfläche) des Bremssegmentes 7 flächendeckend den Stützbereich 10 aus. Es ist (der Kontur der Stützbereiches folgend) seitwärts der ersten und zweiten Stütze 61, 62 zwischen letzteren eingepaßt angeordnet.

Aus der näheren Betrachtung der Fig. 2, die eine Draufsicht der Bremsscheibenvorrichtung - mit einem Bildausschnitt des Bremsscheibenpaketes vermittelt, wonach sich ein Bremsscheiben-Stator 1 und ein Bremsscheiben-Rotor 2 bremsscheibenparallel gegenüberstehen, kann man die Stellung der Lasche 81 des Drehverschlußes 8
a) einmal in geöffneter (nicht geschenkter) Position, in der das Bremssegment 7 (genauer: der Bremssegmentträger 13) nicht durch die (nicht sichtbare) untere Laschenfläche des Laschenendes der Lasche 81 auf dem Teilabschnitt 11 des Stützringes 4 seitlich der ersten Stütze 61 befestigt ist [ausgezogene Darstellung der Lasche 81] und
b) anderenfalls in geschlossener (geschwenkter) Position, in der das Bremssegment 7 (genauer: der Bremssegmentträger 13) durch die (nicht sichtbare) untere Laschenfläche des Laschenendes der Lasche 81 auf dem Teilabschnitt 11 des Stützringes 4 seitlich der ersten Stütze 61 befestigt ist [gestrichelte Darstellung der Lasche 81].
ersehen. Nach der Maßnahme b) wird die geschlossene Position der Lasche 81 durch deren frei bewegliches horizontales Schwenken [aus der Stellung nach Maßnahme a)] um die Schraubenachse der Schraube 12, mit der die Lasche 81 durch (hinsichtlich der Fig. 1vorgeschilderte) Schraubbe wegung auf dem emporstehenden Bremssegmentträger 13 befestigt wird, erreicht.

Der dem (bzw. auf den) Bremssegmentträger 13 anhaftende (festklebende) Bremssegmentbelag 14 wird selbst nicht befestigt. Genauer betrachtet wird man bei Betrachtung der Fig. 2 erkennen, daß mit dem Drehverschluß 8 (besser: der mittenlaschig bewegten Lasche 81) immer zwei Bremssegmente 7, die innerhalb von zwei nebeneinandergelegenen zweier Stützbereiche 10 dem Stützring 4 seriell verteilt angeordnet sind, an der ersten Stütze 61 befestigt werden. Deutlich gemacht wird (in den Figuren 2 und 3) außerdem, daß durch die (um die Schraubenachse) ausgeübte horizontale Schwenkbewegung der Lasche 81 keine Behinderung des mechanisch mit der Radachse 3 verbundenen Bremsscheiben-Rotors 2 eintreffen wird, weil der Wirkungsbereich der Lasche 81 außerhalb des Bremsscheiben-Rotors 2 liegt. Die hinsichtlich der Fig. 1 erwähnte Haken-Fixierung (Haken-Befestigung) wird in der Fig. 2 nicht dargestellt, die aber ebenso an der zweiten Stütze 62 - obwohl figurlich nicht gezeigt - umgesetzt wird.

Letztlich zeigt die Fig. 3 die Besonderheit, daß der vorerwähnten Druckscheibe, die einleitend am Beispiel einer übliche Flugzeugbremse vorgestellt wurde, mittels dem Drehverschluß 8 auch ein Bremsscheiben-Stator 1 befestigt wird. Die Befestigung am Außenumfang der Druckscheibe erfolgt dermaßen, wonach - im Stadium des Endzustandes - die Lasche 81 sowohl außenumfänglich überlappend der Druckscheibe als auch (nach dem Vorbild der Fig. 2) aufliegend der Bremssegmentträger 13, die zwischen zwei Stützen 6 (innerhalb dem betreffenden Stützbereich 10) emporstehend (lotrecht) angeordnet sind, durch Gewindeanziehen der laschenmittigen Schraube 9 schraubenbefestigt wird. Natürlicherweise unterscheidet sich die wirksame Auflagenfläche dieser Lasche 81 nach der Fig. 3 von derjenigen nach der Fig.2, wie man figurlich entnehmen wird. Eine Behinderung des Wirkungsbereiches des nachgeordneten Bremsscheiben-Rotors 2 wird nicht eintreffen.

Zusammenfassend wird eine Bremsvorrichtung für (allgemein) ein Fahrzeug vorgestellt, die (als sogenannte CMC-Bremse) im Vergleich mit bekannten Fahrzeug-Bremsen dermaßen vorteilhaft gestaltet ist, wonach man die (am Stützring 4 verteilten) Bremssegmente 7 (genauer: Bremssegment-träger 13 mit ein- oder doppelseitig ihm fest anhaftendem Bremssegmentbelag 14) mit einem - vorher nicht extra erwähnten Hilfsmittel rationell (mit wenig Zeitaufwand und im verbleibenden eingebauten Zustand der CMC-Bremse) auswechseln kann, wobei die Haltefunktion der (jeweils zwischen zwei am Außenumfang des Stützringes 4 beabstandet angeordneten Brems(belag)segmente 7 von einer schnell lösbaren formschlüssigen Verbindung ausgeführt wird. Dabei werden diese Bremssegmente 7 (Stator) innerhalb dem Stützbereich 10 in diese Stützringe 4 von außen eingesetzt, von diesen gehalten und so dermaßen mit der Radachse 3 verbunden. Der Wechsel der Bremssegmente 7 wird durch deren nach außerhalb (oben) gerichtetes Herausziehen zwischen den Stützringen 4 erledigt. Erwähnt wird auch, daß zum Zwecke der besseren Wärmeableitung [der durch Reibung der Scheiben (Bremssegmentbelag 14 mit Bremsscheiben-Rotor 2) während des Bremsvorganges umgesetzten Wärme] der Bremsscheiben-Stator 1 mit innenliegenden Hohlräumen versehen ist.

### Berzugszeichen

- 1: Bremsscheiben-Stator
- 2: Bremsscheiben-Rotor
- 3: Radachse
- 4: Stützring
- 5: Nut
- 6: Stütze (allg.)
- 61: erste Stütze (mit Raste)
- 62: zweite Stütze (ohne Raste)
- 7: Bremssegment
- 8: Drehverschluß
- 81: Lasche
- 9: Schraube
- 10: Stützbereich
- 11: Teilabschnitt
- 12: Raste
- 13: Bremssegmentträger
- 14: Bremssegmentbelag
- 15: Haken

## Patentansprüche

1. **Bremsvorrichtung** eines Fahrzeuges, mit einem Bremsscheibenpaket, das zusätzlich aus weiteren Führungselementen mit wenigstens einem Bremsscheiben-Stator (1), der auf einer beweglichen Radachse (3) befestigt ist, und einem radachsenbeweglich gelagerten Bremsscheiben-Rotor (2), der dem Bremsscheiben-Stator (1) gegenüberliegend bremsscheibenparallel angeordnet ist, aufgebaut ist, bei dem der Bremsscheiben-Stator (1) mit einem Bremsbelag versehen ist, der sich an einem Stützring (4), der mit der Radachse (3) mechanisch verbunden ist, in Umfangsrichtung erstreckt und dabei fixiert ist, wobei am Außenumfang des Stützringes (4), emporstehend verteilt, mehrere zueinander beabstandete Stützen (6, 61, 62) fest angeordnet sind und zwischen den Stützen (6, 61, 62) stets ein plattenartiges Bremssegment (7) positioniert ist, das zwischen den Stützen (6, 61, 62) auswechselbar ist, **dadurch gekennzeichnet, dass** an einer ersten Stütze (61) von zwei seriell angeordneten verteilten Stützen (61, 62) eine unter Federspannung befindliche Raste (12), die in Richtung einer ihr gegenüber positionierten zweiten Stütze (62) vorgespannt ist, angeordnet ist, welche sich in eine seitwärts der ersten Stütze (61) befindliche Ausnehmung versenken lässt, und der Bremssegmentträger (13), in dem seitwärts eine weitere Aussparung ausgespart ist, die der vorgespannten Raste (12) angepasst ist, durch einen Haken (15), der sich über den Außenrandbereich einer Lasche (81) schieben lässt, und durch die in der weiteren Ausnehmung angeordnete vorgespannte Raste (12) unverrückbar fixiert ist, wobei die Lasche (81) am nicht befestigten Stützende der zweiten Stütze (62) horizontal schwenkbar und frei beweglich gelagert ist und der Haken (15) außerhalb der Seitenkante des Bremssegmentträgers (13) letzterem einseitig fest angeformt ist.

2. **Bremsvorrichtung** nach Anspruch 1, **dadurch gekennzeichnet, daß** die Lasche (81) scheibenförmig ausgebildet ist, die mit einer Schraube (9), die sich mit einer mit Innengewinde versehene Ausnehmung in Richtung des befestigten Stützenendes der zweiten Stütze (62) schrauben läßt, befestigt ist.

3. **Bremsvorrichtung** nach Anspruch 1 oder 2, **dadurch gekennzeichnet, daß** das seitwärts der emporstehenden zweiten Stütze (62) positionierte Bremssegment (7) mit dem (den) Laschenende(n) der Lasche (81) in Richtung der Außenoberfläche des Stützringes (4) befestigt ist.

## Claims

1. Braking device of a vehicle, with a brake disk package that is built up additionally from further guide elements with at least one brake disk stator (1), which is attached to a movable wheel axle (3), and a brake disk rotor (2) supported movably on the wheel axle, which rotor is arranged opposite the brake disk stator (1) with the brake disks parallel, in which package the brake disk stator (1) is provided with a brake lining, which extends on a bearing ring (4), which is connected mechanically to the wheel axle (3), in a circumferential direction and is fixed in this regard, several supports (6, 61, 62) spaced at a distance from one another being fixedly arranged distributed standing up on the outer circumference of the bearing ring (4) and a plate-like brake segment (7) always being positioned between the supports (6, 61, 62), which segment is exchangeable between the supports (6, 61, 62), **characterized in that** arranged at a first support (61) of two supports (61, 62) distributed in serial arrangement is a catch (12) under spring tension, which catch is pre-tensioned in the direction of a second support (62) positioned opposite it and which can be lowered into a recess located to the side of the first support (61), and the brake segment carrier (13), to the side of which a further recess has been sunk that is matched to the pre-tensioned catch (12), is fixed immovably by a hook (15), which can be pushed over the outer edge area of a bracket (81), and by the pre-tensioned catch (12) arranged in the further recess, the bracket (81) being supported horizontally pivotably and freely movably at the unattached support end of the second support (62) and the hook (15) being moulded outside the lateral edge of the brake segment carrier (13) fixedly onto one side of the latter.

2. Braking device according to claim 1, **characterized in that** the bracket (81) is formed in the shape of a disc, which is attached by means of a screw (9), which can be screwed to a recess provided with an internal thread in the direction of the attached support end of the second support (62).

3. Braking device according to claim 1 or 2, **characterized in that** the brake segment (7) positioned to the side of the second support (62) standing up is attached by the bracket end (ends) of the bracket (81) in the direction of the outer surface of the bearing ring (4).

## Revendications

1. Dispositif de freinage pour un véhicule comprenant un paquet de disques de frein qui est constitué, en plus d'autres éléments de guidage, d'au moins un stator de disque de frein (1) fixé sur un axe de roue (3) mobile et un rotor de disque de frein (2) monté mobile sur l'axe de roue parallèlement au stator (1) et en face de celui-ci, dans lequel le stator de disque de frein (1) porte une garniture de frein qui est fixée et s'étend à la périphérie d'une bague de soutien (4) reliée mécaniquement à l'axe de roue (3), et à la périphérie de la bague de soutien (4) sont disposés répartis en saillie plusieurs appuis (6, 61, 62) espacés les uns des autres avec, positionné entre eux toujours un segment de frein en forme de plaque, qui peut être échangé entre les appuis (6, 61, 62), **caractérisé en ce que**
- sur le premier (61) de deux appuis (61, 62) qui se suivent, est monté un ergot (12) précontraint élastiquement en direction du second appui (62), et qui peut s'enfoncer dans un évidement situé de le côté du premier appui (61),
- le support de segment de frein (13), dans lequel est aménagé sur le côté un autre évidement adapté à l'ergot précontraint (12), est fixé de manière définitive par un crochet (15) qui peut coulisser sur la zone marginale externe d'une patte (81) et par l'ergot précontraint (12) monté dans l'autre évidement,
- la patte (81) peut basculer horizontalement sur l'extrémité non fixée du second appui (62) et elle est montée en mouvement libre,
- le crochet (15) est moulé à l'extérieur du bord latéral du support de segment de frein (13) en étant fixé à celui-ci d'un côté.

2. Dispositif de freinage selon la revendication 1, **caractérisé en ce que** la patte (81) a la forme d'un disque fixé par une vis (9) qui peut être vissée en direction de l'extrémité fixée du second appui (62) dans un évidement comportant un filetage interne.

3. Dispositif de freinage selon la revendication 1 ou 2, **caractérisé en ce que** le segment de frein (7) positionné latéralement par rapport au second appui (62) est fixé à la ou aux extrémités de la patte (81) en direction de la surface externe de la bague de soutien (4).
